# EUROPEAN PATENT APPLICATION

(11) **EP 2 717 220 A1**
(43) Date of publication of application: **09.04.2014**
(21) Application number: 12790061.1
(22) Date of filing: 12.04.2012
(51) Int. Cl.: G06T 1/00, H04N 5/76, H04N 5/91, H04N 5/93

(54) **INFORMATION PROCESSING DEVICE, INFORMATION PROCESSING METHOD, AND COMPUTER PROGRAM**

(30) Priority: 23.05.2011 JP 2011114586
(71) Applicant: Sony Corporation, Tokyo 108-0075 (JP)
(72) Inventor: KAWASHITA, Taro, Tokyo 108-0075 (JP)
(74) Representative: Lewis, Darren John
(86) International application number: PCT/JP2012/060001
(87) International publication number: WO 2012/160898

(57) **Abstract**

Provided is an information processing apparatus including an image display unit that displays an image in a predetermined position, an input unit that accepts input for a face portion of the image displayed in the image display unit, and an image selection unit that selects an image having face parameters concerning the input based on the input accepted by the input unit. The image display unit displays the image selected by the image selection unit in a manner that the face portion of the image selected by the image selection unit matches the face portion of the image displayed up to immediately before.

## Description

### Technical Field

The present disclosure relates to an information processing apparatus, an information processing method, and a computer program.

### Background Art

With the widespread use of imaging devices such as digital still cameras, opportunities for users to easily take photos are on the increase. Then, with increasing capacities of recording media to store captured images, users more frequently store many images in imaging devices, personal computers, or other information processing apparatuses. Methods of efficiently searching for a desired image from among such many stored images have been proposed (see, for example, Patent Literature 1).

### Citation List

### Patent Literature

Patent Literature 1: JP 2008-263274A

### Summary of Invention

### Technical Problem

An image captured by the user and stored inside an information processing apparatus may be, for example, pasted to a greeting card such as a New Year's card created by using the information processing apparatus or used to upload from the information processing apparatus as a user's profile image opened on a Web site of the Internet.

When, as described above, an image stored in an information processing apparatus is pasted to a greeting card created by using the information processing apparatus, processing is conventionally performed in which the user is caused to select an image from the screen on which thumbnail images are listed and the image is pasted and if the user is not satisfied, the user is caused to try an image selection again by returning to the screen on which the thumbnail images are listed.

In the conventional processing, however, it is necessary to return to the screen for image selection after an image is selected if the user is not satisfied with the image and it is hard to say that easy image selection processing is provided to the user and therefore, processing allowing the user to select an image easily is sought.

The present disclosure is developed in view of the above problem and an object thereof is to provide a novel and improved information processing apparatus capable of providing an easy image selection to the user by being caused to perform face recognition of stored image data and using a result of the face recognition, an information processing method, and a computer program.

### Solution to Problem

According to an embodiment of the present disclosure, there is provided an information processing apparatus including an image display unit that displays an image in a predetermined position, an input unit that accepts input for a face portion of the image displayed in the image display unit, and an image selection unit that selects an image having face parameters concerning the input based on the input accepted by the input unit. The image display unit displays the image selected by the image selection unit in a manner that the face portion of the image selected by the image selection unit matches the face portion of the image displayed up to immediately before.

Further, according to an embodiment of the present disclosure, there is provided an information processing method including displaying an image in a predetermined position, accepting input for a face portion of the image displayed in the predetermined position, selecting an image having face parameters concerning the input based on the accepted input, and displaying the image selected in a manner that the face portion of the selected image matches the face portion of the image displayed up to immediately before in the predetermined position.

Further, according to an embodiment of the present disclosure, there is provided a computer program for causing a computer to execute displaying an image in a predetermined position, accepting input for a face portion of the image displayed in the predetermined position, selecting an image having face parameters concerning the input based on the accepted input, and displaying the image selected in a manner that the face portion of the selected image matches the face portion of the image displayed up to immediately before in the predetermined position.

### Advantageous Effects of Invention

According to the present disclosure, as described above, a novel and improved information processing apparatus capable of providing an easy image selection to the user by being caused to perform face recognition of stored image data and using a result of the face recognition, an information processing method, and a computer program can be provided.

### Brief Description of Drawings

[FIG. 1] FIG. 1 is an explanatory view showing an appearance example of an information processing apparatus 100 according to a first embodiment of the present disclosure.
[FIG. 2] FIG. 2 is an explanatory view showing a functional configuration of the information processing apparatus 100 according to the first embodiment of the present disclosure.
[FIG. 3] FIG. 3 is an explanatory view showing the functional configuration of a control unit 140 according to the first embodiment of the present disclosure.
[FIG. 4] FIG. 4 is a flow chart showing an operation of the information processing apparatus 100 according to the first embodiment of the present disclosure.
[FIG. 5] FIG. 5 is an explanatory view showing an example of a screen displayed in an image display unit 120.
[FIG. 6] FIG. 6 is an explanatory view showing an example of a screen displayed in the image display unit 120.
[FIG. 7] FIG. 7 is an explanatory view showing an example of a screen displayed in the image display unit 120.
[FIG. 8] FIG. 8 is an explanatory view showing an example of a screen displayed in the image display unit 120.
[FIG. 9] FIG. 9 is an explanatory view showing an example of a screen displayed in the image display unit 120.
[FIG. 10] FIG. 10 is an explanatory view showing an example of a screen displayed in the image display unit 120.
[FIG. 11] FIG. 11is an explanatory view showing an example of a screen displayed in the image display unit 120.
[FIG. 12] FIG. 12 is an explanatory view showing an example of a screen displayed in the image display unit 120.
[FIG. 13] FIG. 13 is an explanatory view showing an example of a screen displayed in the image display unit 120.
[FIG. 14] FIG. 14 is an explanatory view showing an example of a screen displayed in the image display unit 120.
[FIG. 15] FIG. 15 is a flow chart showing the operation of the information processing apparatus 100 according to the first embodiment of the present disclosure.
[FIG. 16] FIG. 16 is an explanatory view showing an example of a screen displayed in the image display unit 120.
[FIG. 17] FIG. 17 is an explanatory view showing an example of a screen displayed in the image display unit 120.
[FIG. 18] FIG. 18 is an explanatory view showing appearance example of the information processing apparatus 100.

### Description of Embodiments

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

The description will be provided in the order shown below:
<1. First Embodiment>
   [1-1. Appearance Example of Information Processing Apparatus]
   [1-2. Functional Configuration of Information Processing Apparatus]
   [1-3. Operation of Information Processing Apparatus]
<2. Second Embodiment>
<3. Summary>

### <1. First Embodiment>

### [1-1. Appearance Example of Information Processing Apparatus]

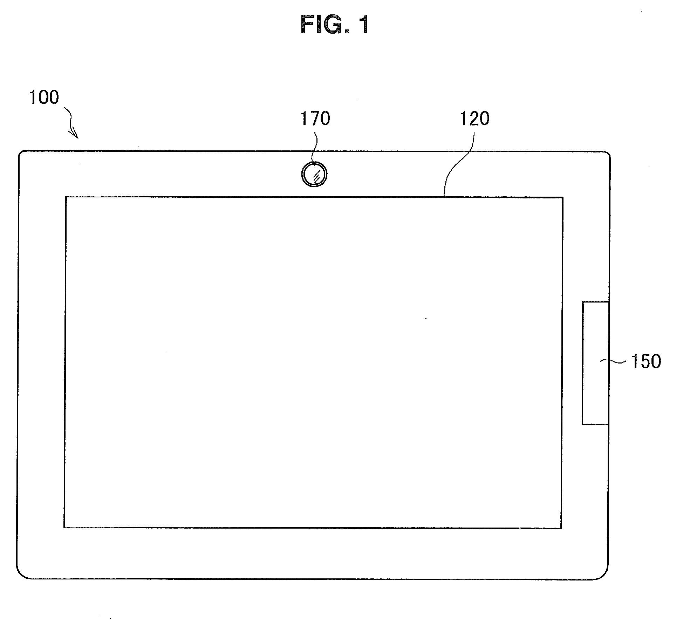

First, an appearance example of an information processing apparatus according to a first embodiment of the present disclosure will be described with reference to a drawing. FIG. 1 is an explanatory view showing an appearance example of the information processing apparatus 100 according to the first embodiment of the present disclosure. Hereinafter, an appearance example of the information processing apparatus 100 according to the first embodiment of the present disclosure will be described using FIG. 1.

As shown in FIG. 1, the information processing apparatus 100 according to the first embodiment of the present disclosure is a tablet device. In the information processing apparatus 100, as shown in FIG. 1, the image display unit 120 to display an image is provided on one side of the information processing apparatus 100. The image display unit 120 shown in FIG. 1 includes a touch panel and the user of the information processing apparatus 100 can operate the information processing apparatus 100 by directly touching the image display unit 120 with a finger.

As shown in FIG. 1, an operation unit 150 is provided on one side on the front side of the information processing apparatus 100. The user of the information processing apparatus 100 can operate the information processing apparatus 100 by, in addition to directly touching the image display unit 120 with a finger, operating the operation unit 150.

In addition, as shown in FIG. 1, an imaging device 170 is provided on the front side of the information processing apparatus 100. An image captured by the imaging device 170 can be, in addition to being stored inside the information processing apparatus 100 as image data by a user's operation of the information processing apparatus 100, displayed in the image display unit 120 by predetermined processing performed by the information processing apparatus 100.

The information processing apparatus 100 as a tablet device shown in FIG. 1 contains a flash memory or another recording medium. In the recording medium, images captured by the user of the information processing apparatus 100 using the information processing apparatus 100, a digital camera, or another imaging device are stored. The information processing apparatus 100 can display an image stored in the recording medium in the image display unit 120. Then, when an image is displayed in the image display unit 120, if the user performs some operation on a face portion of the image, the information processing apparatus 100 can search the recording medium for an image in accordance with the operation and display the image in the image display unit 120. Processing content of the information processing apparatus 100 according to an embodiment of the present disclosure will be described later.

In the foregoing, an appearance example of the information processing apparatus 100 according to the first embodiment of the present disclosure has been described using FIG. 1. Next, a functional configuration of the information processing apparatus 100 according to the first embodiment of the present disclosure will be described.

### [1-2. Functional Configuration of Information Processing Apparatus]

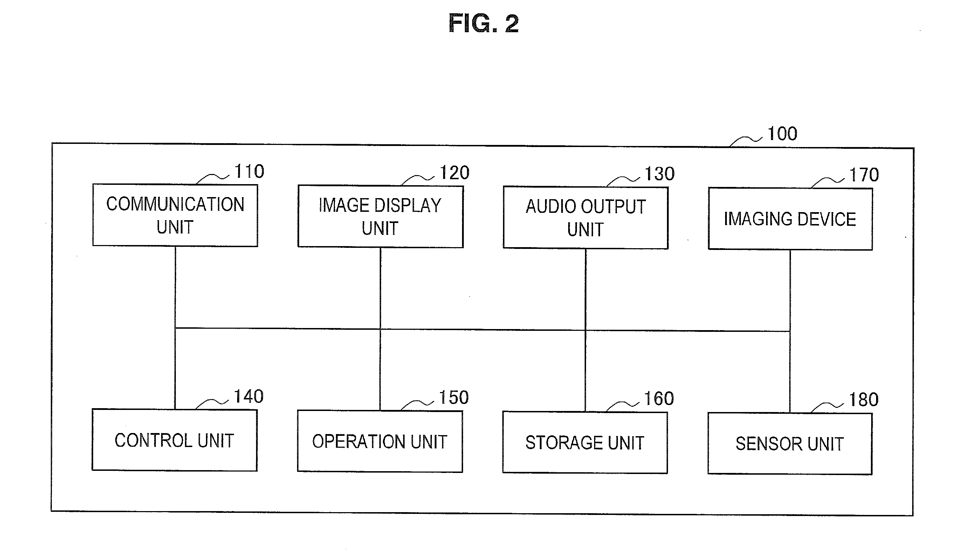

FIG. 2 is an explanatory view showing a functional configuration of the information processing apparatus 100 according to the first embodiment of the present disclosure. The functional configuration of the information processing apparatus 100 according to the first embodiment of the present disclosure will be described below using FIG. 2.

As shown in FIG. 2, the information processing apparatus 100 according to the first embodiment of the present disclosure includes a communication unit 110, the image display unit 120, an audio output unit 130, the control unit 140, the operation unit 150, a storage unit 160, the imaging device 170, and a sensor unit 180.

The communication unit 110 performs communication with other devices wirelessly or by wire via a network.

The image display unit 120 displays an image. The image display unit 120 is configured by, for example, a liquid crystal display, an organic EL display, or another thin display apparatus and configured to display an image based on a predetermined image signal under the control of the control unit 140.

In the information processing apparatus 100 according to the first embodiment of the present disclosure, a touch panel is included on the front side of the image display unit 120. By including a touch panel on the front side of the image display unit 120, the information processing apparatus 100 can provide an operation by the front side of the image display unit 120 being touched with a finger to the user of the information processing apparatus 100.

In the present embodiment, the image display unit 120 displays an image selected by the user of the information processing apparatus 100 and stored in the storage unit 160. Then, when the user of the information processing apparatus 100 performs an operation to change an image displayed by the image display unit 120 on the information processing apparatus 100, the image display unit 120 displays an image after he change under the control of the control unit 140.

The audio output unit 130 outputs audio. The audio output unit 130 is configured by, for example, a speaker or earphone and configured to display audio based on a predetermined audio signal.

The control unit 140 controls the operation of the information processing apparatus 100. More specifically, the control unit 140 controls communication by the communication unit 110, the image display by the image display unit 120, and the audio output by the audio output unit 130. The control unit 140 is configured by, for example, a CPU (Central Processing Unit) or the like.

The operation unit 150 receives an operation by the user of the information processing apparatus 100. The control unit 140 controls the operation of the information processing apparatus 100 based on a user's operation on the operation unit 150. Incidentally, the touch panel included on the front side of the image display unit 120 is an example of the operation unit in the present disclosure.

The storage unit 160 is configured by, for example, a nonvolatile memory such as a flash memory and stores a computer program to operate the information processing apparatus 100, image data displayed in the image display unit 120 by the control unit 140, and other electronic data. In the present embodiment, if a human face is contained in image data, the storage unit 160 stores various parameters obtained by performing predetermined face recognition processing on the face. The face recognition processing may also be performed by the control unit 140 using a computer program stored in the storage unit 160. The timing of performing the face recognition processing may be, for example, when imaging processing is performed by the imaging device 170 or when a processing load of the information processing apparatus 100 is light. Various parameters obtained by performing the face recognition processing include, for example, the distinction of men and women, age, whether eyes are open or closed, whether glasses are put on, face orientation, angle of the face when a line connecting a parietal region and a jaw portion is used as an axis, and degree of smile.

The imaging device 170 performs imaging processing using, for example, a CCD image sensor, CMOS image sensor, or another imaging device. Image data obtained by imaging processing being performed by the imaging device 170 is displayed in the image display unit 120 or stored in the storage unit 160 after predetermined image processing being performed thereon by the control unit 140.

The sensor unit 180 detects movement of the information processing apparatus 100 and is configured by, for example, a gyro sensor or an acceleration sensor. When movement of the information processing apparatus 100 is detected by the sensor unit 180, what kind of movement of the information processing apparatus 100 is detected by the sensor unit 180 is detected by the control unit 140. The control unit 140 performs an operation based on the movement of the information processing apparatus 100.

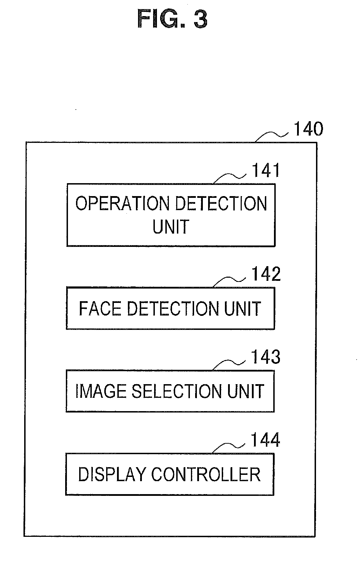

The functional configuration of the control unit 140 will be described in detail. FIG. 3 is an explanatory view showing the functional configuration of the control unit 140 according to the first embodiment of the present disclosure. As shown in FIG. 3, the control unit 140 according to an embodiment of the present disclosure includes an operation detection unit 141, a face detection unit 142, an image selection unit 143, and a display controller 144.

The operation detection unit 141 detects a user's operation on the information processing apparatus 100 by the user of the information processing apparatus 100. The operation detection unit 141 detects content of a user's operation on the touch panel provided in the image display unit 120 or a user's operation on the operation unit 150. When detecting content of a user's operation on the touch panel, the operation detection unit 141 detects the position where the touch panel is touched and also the number of fingers that touched the touch panel.

The face detection unit 142 detects the position of a face in the image displayed in the image display unit 120. Whether the user of the information processing apparatus 100 has performed an operation on a face displayed in the image display unit 120 is determined by the position of a face of the image displayed in the image display unit 120 being detected by the face detection unit 142 and content of a user's operation on the touch panel being detected by the operation detection unit 141. Face detection processing by the face detection unit 142 is not limited to a specific method. The face detection unit 142 can detect the position of a face in the image displayed in the image display unit 120 by detecting feature points, for example, the eyes, nose, and mouth of a face.

The image selection unit 143 selects, from among image data stored in the storage unit 160, an image matching predetermined conditions. More specifically, when the user of the information processing apparatus 100 performs an operation on the information processing apparatus 100, content of the operation is detected by the operation detection unit 141 and the face detection unit 142 and the image selection unit 143 selects an image in accordance with the detected result from image data stored in the storage unit 160.

Though a concrete operation will be described later, if, for example, while an image with a face is displayed in the image display unit 120, the user of the information processing apparatus 100 performs an operation of flicking the face with his (her) finger, the operation detection unit 141 and the face detection unit 142 detect content of the operation. Then, the image selection unit 143 selects, from image data stored in the storage unit 160, an image in which a person in the image display unit 120 is looking in the direction of the flick with a finger of the user of the information processing apparatus 100.

Also if, for example, while an image with a face is displayed in the image display unit 120, the user of the information processing apparatus 100 touches the parietal region and the jaw portion of the face with fingers and performs a rotating operation, the operation detection unit 141 and the face detection unit 142 detect content of the operation. Then, the image selection unit 143 selects an image of a person in the image display unit 120 from image data stored in the storage unit 160 based on the rotating operation by the user of the information processing apparatus 100.

The display controller 144 controls the image display in the image display unit 120. More specifically, the display controller 144 displays an image based on an operation performed on the information processing apparatus 100 by the user of the information processing apparatus 100. The operation detection unit 141 and the face detection unit 142 detect content of an operation by the user of the information processing apparatus 100 and when the image selection unit 143 selects an image in accordance with a detected result from image data stored in the storage unit 160, the display controller 144 exercises control so that the image selected by the image selection unit 143 is displayed in the image display unit 120.

At this point, when displaying an image in the image display unit 120, the display controller 144 exercises control so that the image selected by the image selection unit 143 is displayed by adjusting the face portion thereof to that of the image that has been displayed in the image display unit 120 in position and size.

For example, the control unit 140 can have the functional configuration as shown in FIG. 3 by reading a computer program stored in the storage unit 160 and executing the read computer program.

In the foregoing, the functional configuration of the information processing apparatus 100 according to the first embodiment of the present disclosure has been described. Next, the operation of the information processing apparatus 100 according to the first embodiment of the present disclosure will be described.

### [1-3. Operation of Information Processing Apparatus]

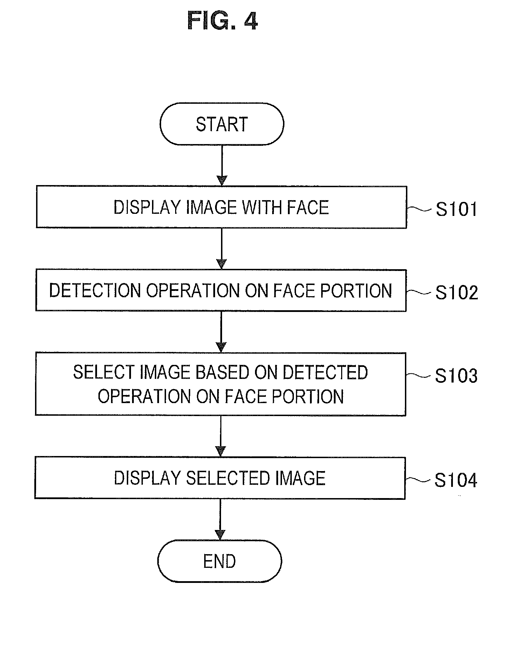

FIG. 4 is a flow chart showing an operation of the information processing apparatus 100 according to the first embodiment of the present disclosure. The flow chart shown in FIG. 4 shows the operation of the information processing apparatus 100 when an operation by the user of the information processing apparatus 100 is performed on an image with a face displayed in a predetermined position of the image display unit 120 while the information processing apparatus 100 performs processing to create a New Year's card or other greeting cards. The operation of the information processing apparatus 100 according to the first embodiment of the present disclosure will be described below using FIG. 4.

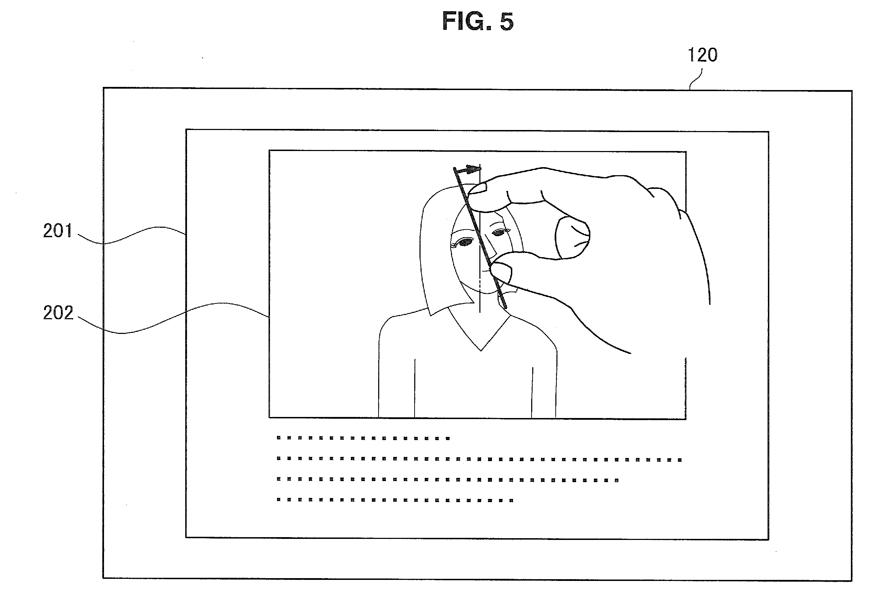

The image display unit 120 displays an image with a face in the predetermined position of the image display unit 120 under the control of the display controller 144 (step S101). FIG. 5 is an explanatory view showing a state in which an image with a face is displayed in a predetermined position of the image display unit 120 under the control of the display controller 144. FIG. 5 is an explanatory view showing an example of the image displayed in the image display unit 120 and illustrates a state in which a greeting card 201 is edited using the information processing apparatus 100 and an image with a face in an image display area 202 is displayed.

In step S101 described above, when the image display unit 120 displays an image with a face in the predetermined position of the image display unit 120 under the control of the display controller 144, the operation detection unit 141 detects an operation on the face portion by the user (step S102). The operation on the face portion by the user detected by the operation detection unit 141 includes, for example, an operation of flicking the face portion (flicking operation) with his (her) finger and an operation of rotating the face portion by putting fingers between a parietal region and a jaw portion (rotating operation).

FIG. 5 also illustrates a hand of the user of the information processing apparatus 100. The hand shows a state in which an attempt is made to perform an operation to rotate (rotating operation) a face portion by putting fingers between a parietal region and a jaw portion of a face displayed in the image display area 202. When a plurality of faces is displayed in the image display area 202, the operation detection unit 141 detects a user's operation for each face.

When the operation detection unit 141 detects an operation by the user on the face portion in an image, the image selection unit 143 selects an appropriate image having the same face as that displayed in the image display unit 120 based on the operation on the face portion detected by the operation detection unit 141 from the storage unit 160 (step S103). If, for example, the operation detection unit 141 detects a flicking operation on the face portion by the user, the image selection unit 143 selects, from the storage unit 160, an image having the same face as that displayed in the image display unit 120 and whose face is oriented in the direction of the flicking with a user's finger. Also when, for example, the operation detection unit 141 detects a rotating operation by the user on the face portion, the image selection unit 143 selects an image having the same face as that displayed in the image display unit 120 and the parietal region and the jaw portion of whose face correspond to the rotation from the storage unit 160.

If a plurality of similar images is present in the storage unit 160, the image selection unit 143 may select an image based on predetermined rules. For example, the image selection unit 143 may select an image by taking preference of the new or old imaging time or storage time or totally randomly.

In step S103 described above, when the image selection unit 143 selects an appropriate image based on an operation on the face portion detected by the operation detection unit 141 from the storage unit 160, the display controller 144 exercises control so that the image selected by the image selection unit 143 is displayed in place of the image that has been displayed in the predetermined position of the image display unit 120 (step S104).

In step S104, when displaying the image selected by the image selection unit 143 in place of the image that has been displayed in the predetermined position of the image display unit 120, the display controller 144 desirably adjusts the size of a face in the newly displayed image to that of a face in the image that has been displayed. This is because, by adjusting the sizes of faces, a new image can be presented without breaking the layout of a greeting card such as a New Year's card being created.

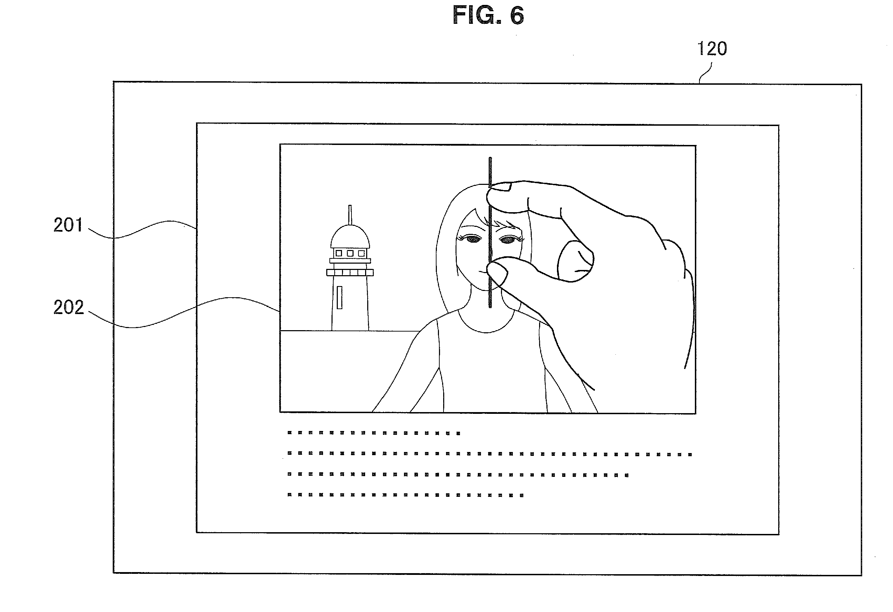

FIG. 6 illustrates a state in which the greeting card 201 is edited using the information processing apparatus 100 and an image with a face in the image display area 202 is displayed. In addition, FIG. 6 shows the transition to a state in which a new image having the same face is displayed in the image display area 202 from the state shown in FIG. 5 by a rotating operation being performed by the user of the information processing apparatus 100 on the face portion of the image displayed in the image display area 202.

Thus, only by a rotating operation being performed by the user of the information processing apparatus 100 on the face portion of the image displayed in the image display unit 120, a new image having the same face is displayed in the image display area 202 and thus, highly convenient switching processing of images can be provided to the user.

Incidentally, when displaying a new image accompanying a user's operation of the information processing apparatus 100 in the image display unit 120, the display controller 144 may extract and display only the face portion of the new image.

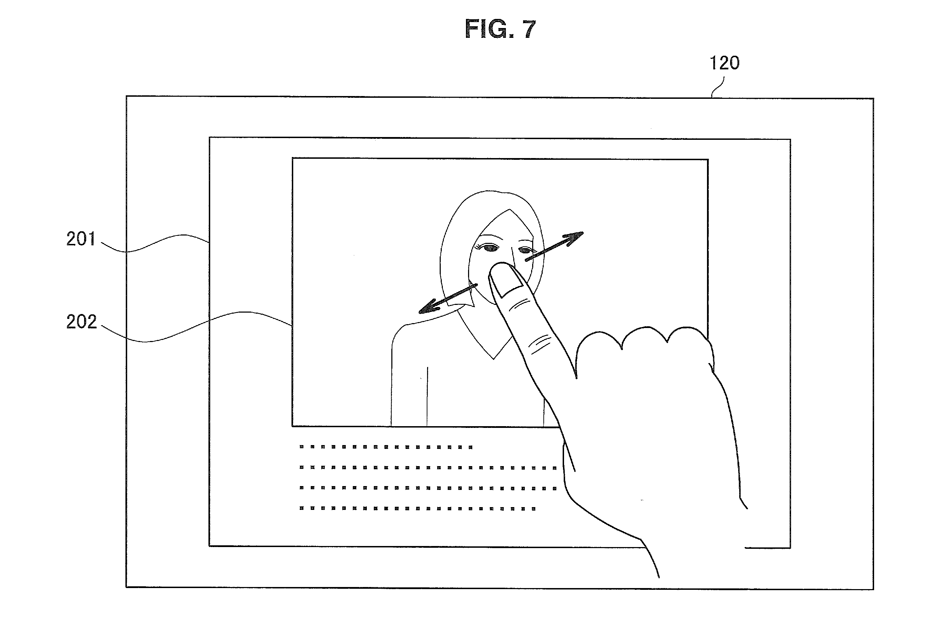

Switching processing of images by another operation will be described. FIG. 7 is an explanatory view showing the state in which the image with the face is displayed in the predetermined position of the image display unit 120 under the control of the display controller 144. FIG. 7 illustrates a state in which the greeting card 201 is edited using the information processing apparatus 100 and the image with the face in the image display area 202 is displayed.

FIG. 7 also illustrates the hand of the user of the information processing apparatus 100. The hand shows a state in which an attempt is made to perform a flicking operation on the face displayed in the image display area 202.

If the user of the information processing apparatus 100 performs a flicking operation in the right direction on a face displayed in the image display area 202, the image selection unit 143 selects an image that is the same face as the operated face and is oriented in the right direction from the storage unit 160.

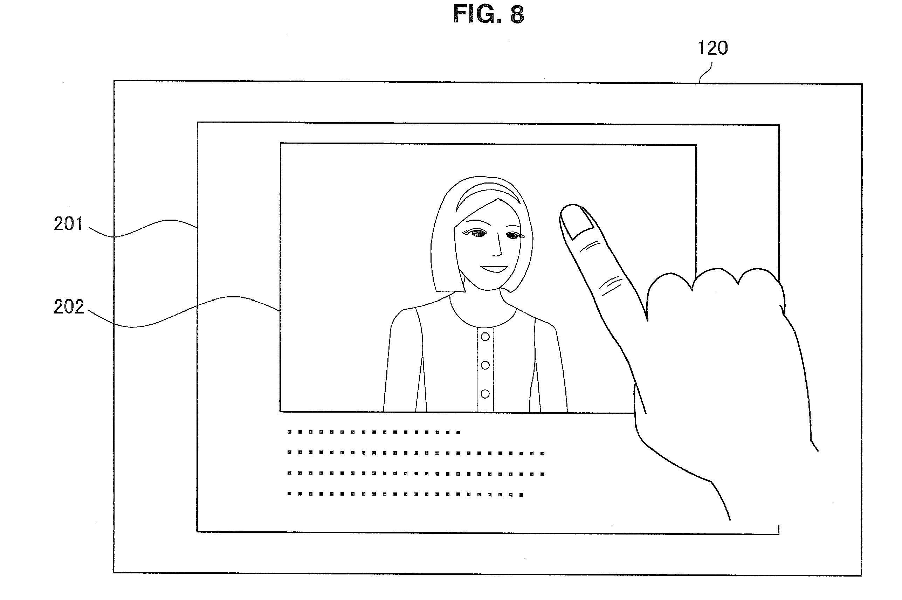

FIG. 8 illustrates a state in which the greeting card 201 is edited using the information processing apparatus 100 and the image with the face in the image display area 202 is displayed. In addition, FIG. 8 shows the transition to a state in which a new image having the same face is displayed in the image display area 202 from the state shown in FIG. 7 by a flicking operation in the right direction being performed by the user of the information processing apparatus 100 on the face portion of the image displayed in the image display area 202.

Also if the user of the information processing apparatus 100 performs a flicking operation in the left direction on a face displayed in the image display area 202, the image selection unit 143 selects an image that is the same face as the operated face and is oriented in the left direction from the storage unit 160.

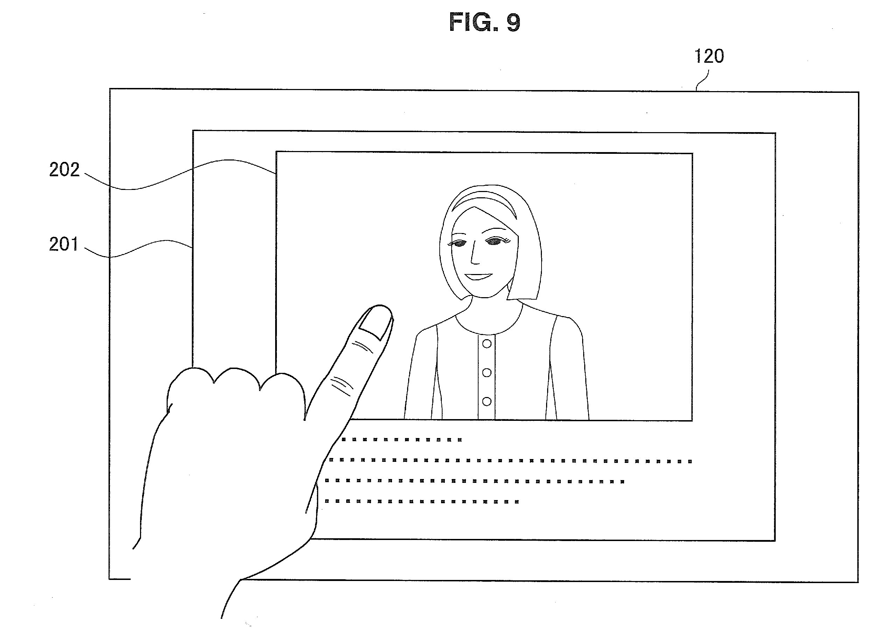

FIG. 9 illustrates a state in which the greeting card 201 is edited using the information processing apparatus 100 and the image with the face in the image display area 202 is displayed. In addition, FIG. 9 shows the transition to a state in which a new image having the same face is displayed in the image display area 202 from the state shown in FIG. 7 by a flicking operation in the left direction being performed by the user of the information processing apparatus 100 on the face portion of the image displayed in the image display area 202.

Thus, only by a flicking operation being performed by the user of the information processing apparatus 100 on the face portion of the image displayed in the image display unit 120, a new image having the same face is displayed in the image display area 202 and thus, highly convenient switching processing of images can be provided to the user.

Incidentally, when the user of the information processing apparatus 100 performs a flicking operation on the face portion of the image displayed in the image display unit 120, the operation detection unit 141 may detect the momentum of the flicking so that the image selection unit 143 selects an image having the face orientation in accordance with the detected momentum. That is, if the user of the information processing apparatus 100 performs a flicking operation of great momentum on the face portion of the image displayed in the image display unit 120, the image selection unit 143 may select an image whose face is oriented just beside or obliquely and if the user of the information processing apparatus 100 performs a weak flicking operation on the face portion of the image displayed in the image display unit 120, the image selection unit 143 may select an image whose face is oriented slightly to the left or right from the front.

Thus, when an image with a face is displayed in the predetermined position of the image display unit 120, highly convenient switching processing of images can be provided to the user by accepting an operation by the user of the information processing apparatus 100, detecting the user's operation, and selecting and displaying an image in accordance with a detection result.

Another embodiment of the processing to accept an operation by the user of the information processing apparatus 100, detect the user's operation, and select and display an image in accordance with a detection result will be described. In the above description, a case when the greeting card 201 is edited by using the information processing apparatus 100 is taken as an example, but the present technology is also applicable to other processing using the information processing apparatus 100. If, for example, the information processing apparatus 100 includes a telephone directory function, the present technology can also be applied to the selection of an image entered in the telephone directory.

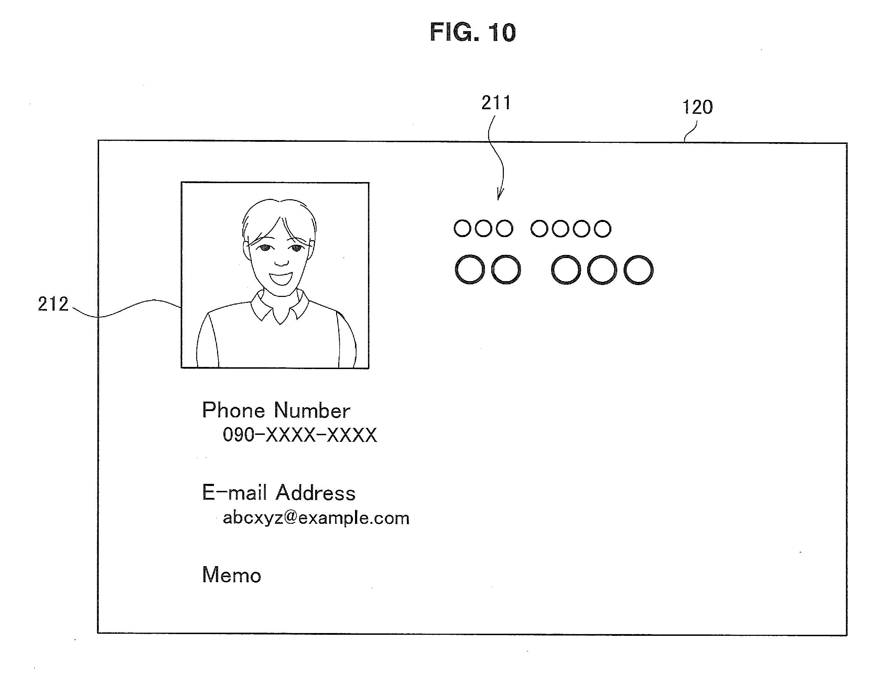

FIG. 10 is an explanatory view showing an example of the screen displayed in the image display unit 120. FIG. 10 shows a state in which a telephone directory entry screen 211 is displayed in the image display unit 120. The telephone directory entry screen 211 is provided with an image display area 212. If the user of the information processing apparatus 100 performs a rotating operation or a flicking operation on the image display area 212, the image selection unit 143 selects an image in accordance with content of a user's operation and the display controller 144 displays the image selected by the image selection unit 143 in the image display area 212.

Next, an application example of the present technology will be described. As described above, if the operation detection unit 141 detects an operation by the user on the face portion in an image, the image selection unit 143 selects an appropriate image having the same face as that displayed in the image display unit 120 based on the operation on the face portion detected by the operation detection unit 141 from the storage unit 160, but if many target images are contained in the storage unit 160, selection processing by the image selection unit 143 is under heavy load, which could result in a longer time before a new image is displayed in the image display unit 120.

Thus, by causing the user of the information processing apparatus 100 to narrow down target images in advance, the load on the selection processing by the image selection unit 143 can be reduced.

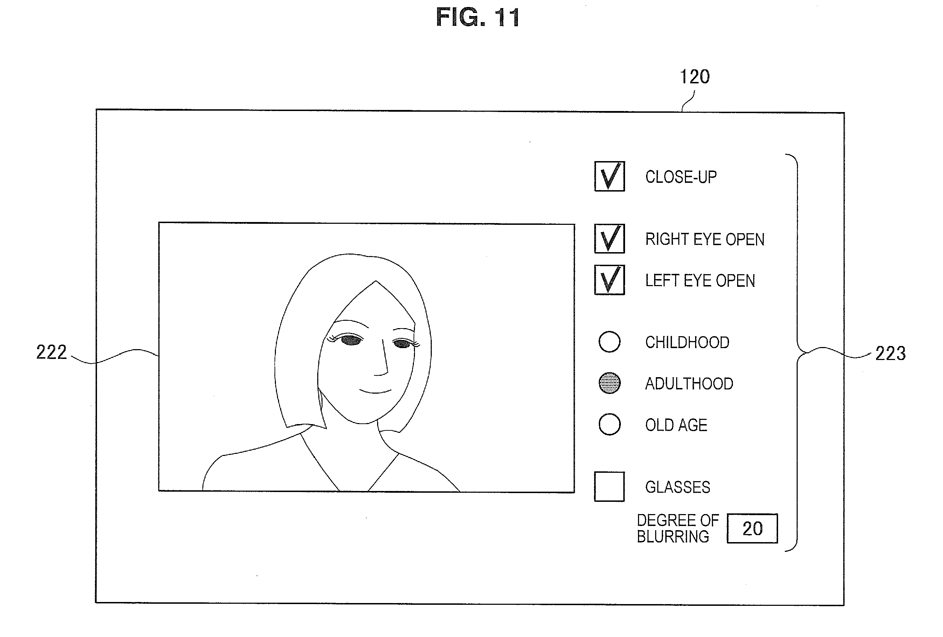

FIG. 11 is an explanatory view showing an example of the screen displayed in the image display unit 120. FIG. 11 shows a state in which an image display area 222 where an image stored in the storage unit 160 is displayed and an image acquisition condition designation area 223 to specify conditions under which the image selection unit 143 acquires an image are displayed in the image display unit 120. By causing the user of the information processing apparatus 100 to specify image acquisition conditions displayed in the image acquisition condition designation area 223, the image selection unit 143 selects an image matching image acquisition conditions from the storage unit 160, leading to the reduction of load on the selection processing by the image selection unit 143.

In FIG. 11, as image acquisition conditions displayed in the image acquisition condition designation area 223, an image in which a face is in close-up, an image in which a right eye is open, an image in which a left eye is open, an image of one of the childhood/adulthood/old age, a bespectacled image, and a level of blurring of an image are shown,. Naturally, image acquisition conditions from the storage unit 160 are not limited to such examples.

The above description deals with a case when a direct operation by the user of the information processing apparatus 100 on a portion of a face in the image displayed in the image display unit 120 is detected and an image of a person of the face is selected and displayed. In accordance with, addition to the direct operation on a portion of a face in the image displayed in the image display unit 120, an operation by the user of the information processing apparatus 100, an image of a person of the face may be selected and displayed.

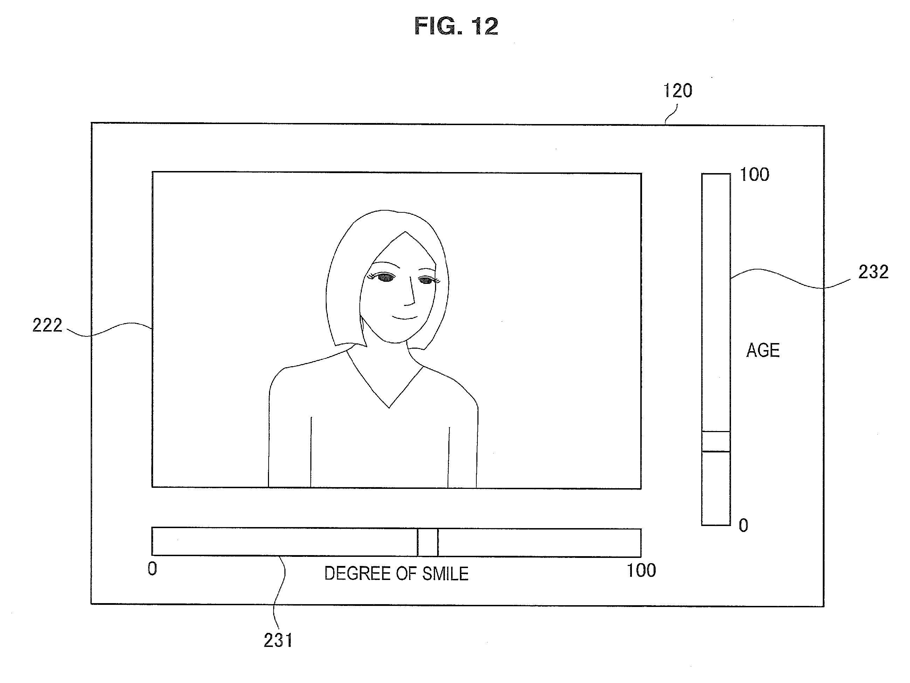

FIG. 12 is an explanatory view showing an example of the screen displayed in the image display unit 120. FIG. 12 shows a state in which the image display area 222 where an image stored in the storage unit 160 is displayed and slide bars 231, 232 to switch images displayed in the image display area 222 are displayed in the image display unit 120. By causing the user of the information processing apparatus 100 to operate the slide bars 231, 232, the image displayed in the image display area 222 is switched to an image of the same person and conditions specified by the user of the information processing apparatus 100.

The slide bar 231 is used to specify the degree of smile of a face and the slide bar 232 is used to specify the age of a person. It is needless to say that conditions specified by the slide bars are not limited to such examples.

In addition, for example, the information processing apparatus 100 may be inclined to detect the inclination thereof by the sensor unit 180 so that the image selection unit 143 selects an image in accordance with the direction in which the information processing apparatus 100 is inclined from the storage unit 160. At this point, only if the user of the information processing apparatus 100 has performed a predetermined operation (for example, pressing of a predetermined button) on an input unit, the inclination of the information processing apparatus 100 may be detected by the sensor unit 180 so that the image selection unit 143 selects an image in accordance with the direction in which the information processing apparatus 100 is inclined from the storage unit 160.

A case when a direct operation on a portion of a face in the image displayed in the image display unit 120 by the user of the information processing apparatus 100 is detected and an image of the same person as the person having the face is selected and displayed has been described, but by causing the user of the information processing apparatus 100 to touch a portion of a face in the image displayed in the image display unit 120, the image display unit 120 may be caused to display an image containing a face of the same person or a similar face.

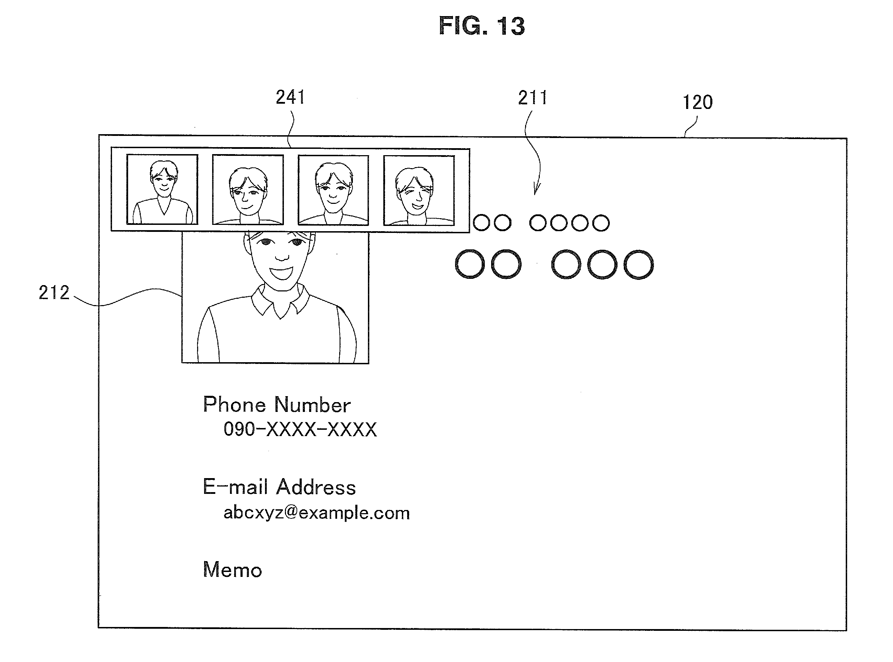

FIG. 13 is an explanatory view showing an example of the screen displayed in the image display unit 120. FIG. 13 shows, like FIG. 10, a state in which the telephone directory entry screen 211 is displayed in the image display unit 120. The telephone directory entry screen 211 is provided with the image display area 212. By causing the user of the information processing apparatus 100 to touch a face portion of the image displayed in the image display area 212 with a finger, an image display area 241 displaying an image containing a face of the same person as that displayed in the image display area 212 or a similar face is displayed in the image display unit 120 under the control of the display controller 144.

With images being displayed in the image display area 241 as shown in FIG. 13, the user of the information processing apparatus 100 can select an image containing a face of the same person as that displayed in the image display area 212 or a similar face and therefore, the information processing apparatus 100 can enhance the convenience of image selection for the user.

In FIG. 13, a state in which the image display area 241 is caused to be displayed over the image display area 212 after the user of the information processing apparatus 100 being caused to touch a face portion of the image displayed in the image display area 212 is illustrated, but the state is not limited to such an example.

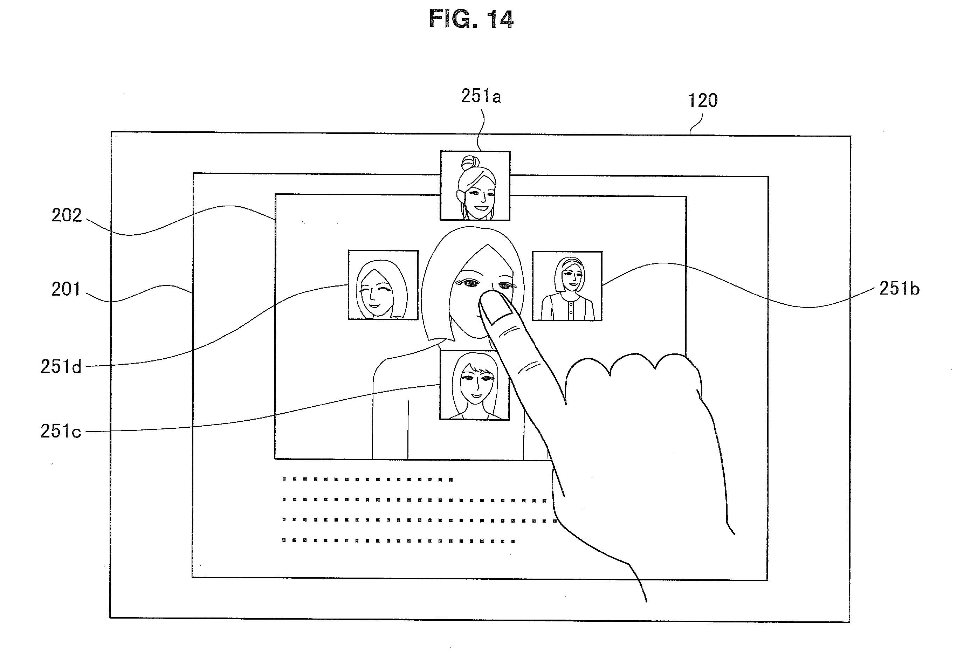

FIG. 14 is an explanatory view showing an example of the screen displayed in the image display unit 120. FIG. 14 illustrates, like FIG. 5 or the like, a state in which the greeting card 201 is edited using the information processing apparatus 100 and images with faces in the image display area 202 are displayed. By causing the user of the information processing apparatus 100 to touch a face portion of the image displayed in the image display area 202 with a finger, image display areas 251a, 251b, 251c, 251d displaying an image containing a face of the same person as that displayed in the image display area 202 or a similar face are displayed in the image display unit 120 under the control of the display controller 144.

In FIG. 14, a state in which when the user of the information processing apparatus 100 is caused to touch a face portion of the image displayed in the image display area 202, the display controller 144 displays the image display areas 251a, 251b, 251c, 251d around the face is illustrated. Thus, with images being displayed in the image display areas 251a, 251b, 251c, 251d as shown in FIG. 14, the user of the information processing apparatus 100 can select an image containing a face of the same person as that displayed in the image display area 202 or a similar face and therefore, the information processing apparatus 100 can enhance the convenience of image selection for the user.

When a commemorative photo is taken on a trip, a sequence of photos are frequently taken in the same place to avoid a failed photo due to blurring or the like or an ill composed photo. Thus, one selected photo and a similar photo are more likely to have been taken in sequence. Therefore, the image selection unit 143 may display images whose capturing time is close to that of the selected photo and having the same face as images displayed in the image display areas 251a, 251b, 251c, 251d. If the user of the information processing apparatus 100 is considered to want to place a photo oriented like this face in this place as a scene to use a photo, the image selection unit 143 may select images inclined in the same manner as images displayed in the image display unit 120.

### <2. Second Embodiment>

In the first embodiment of the present disclosure described above, the processing of detecting an operation by the user of the information processing apparatus 100 on the image displayed in the image display unit 120 and newly displaying an image of the same person as the person whose face is contained in the image being displayed or a person having a similar face in the image display unit 120 in accordance with the detected operation has been described. In a second embodiment of the present disclosure, processing of capturing the face of the user of the information processing apparatus 100 using the information processing apparatus 100 and newly displaying an image of the same person as the person whose face is contained in the image being displayed in the image display unit 120 or a person having a similar face in the image display unit 120 in accordance with the state of the captured face of the user will be described.

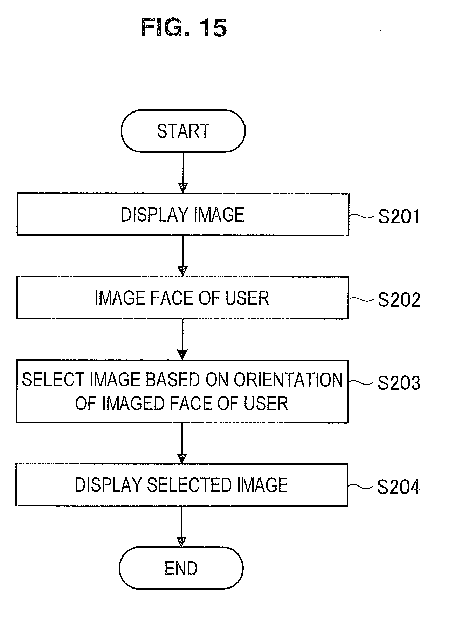

FIG. 15 is a flow chart showing the operation of the information processing apparatus 100 according to the second embodiment of the present disclosure. The flow chart shown in FIG. 15 shows the operation of the information processing apparatus 100 when an image of the same person as the person whose face is contained in the image being displayed in the image display unit 120 or a person having a similar face in the image display unit 120 in accordance with the state of a captured face of the user of the information processing apparatus 100 captured using the information processing apparatus 100 while the information processing apparatus 100 performs processing to create a New Year's card or other greeting cards. The operation of the information processing apparatus 100 according to the second embodiment of the present disclosure will be described below using FIG. 15.

The image display unit 120 displays an image with a face in the predetermined position of the image display unit 120 under the control of the display controller 144 (step S201). While the image display unit 120 displays an image with a face in the predetermined position of the image display unit 120 under the control of the display controller 144, the imaging device 170 images the face of the user operating the information processing apparatus 100 (step S202).

When the imaging device 170 images the face of the user operating the information processing apparatus 100, the face detection unit 142 detects in which direction the face of the user operating the information processing apparatus 100 is oriented in the image captured by the imaging device 170 to deliver information about the oriented direction to the image selection unit 143. The image selection unit 143 selects an image of the same person as the person oriented in the same direction as the face of the user detected by the face detection unit 142 and whose face is displayed in the predetermined position of the image display unit 120 from the storage unit 160 (step S203). If the imaging device 170 is provided, as shown in FIG. 1, on the same surface as the image display unit 120, the image selection unit 143 selects an image in which the same person as the person whose face is displayed in the predetermined position of the image display unit 120 is oriented to the left if the user operating the information processing apparatus 100 is oriented to the right and an image in which the same person as the person whose face is displayed in the predetermined position of the image display unit 120 is oriented to the right if the user is oriented to the left from the storage unit 160.

In step S203 described above, when the image selection unit 143 selects an image from the storage unit 160, the display controller 144 exercises control so that the image selected by the image selection unit 143 is displayed in place of the image that has been displayed in the predetermined position of the image display unit 120 (step S204).

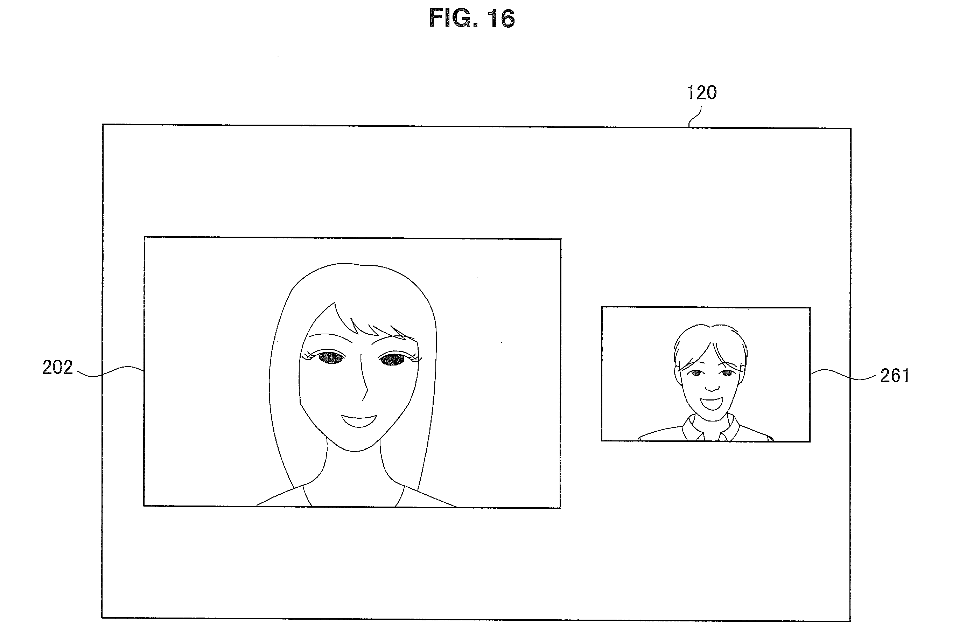

FIG. 16 is an explanatory view showing an example of the screen displayed in the image display unit 120. FIG. 16 illustrates a state in which an image with a face is displayed in the image display area 202. FIG. 16 also illustrates a state in which an image display area 261 that displays the image captured by the imaging device 170 is also displayed in real time in the image display unit 120. Therefore, the image displayed in the image display area 261 is an image with the face of the user operating the information processing apparatus 100.

If the user operating the information processing apparatus 100 is oriented to the right toward the information processing apparatus 100, the face detection unit 142 detects the orientation of the face of the user operating the information processing apparatus 100 in the image captured by the imaging device 170. Then, the image selection unit 143 acquires an image in which the same person as the person whose face is contained in the image display area 202 is captured and the person is oriented to the left from the storage unit 160. Then, the display controller 144 exercises control so that the image selected by the image selection unit 143 is displayed in the image display area 202 in place of the image that has been displayed in the image display area 202.

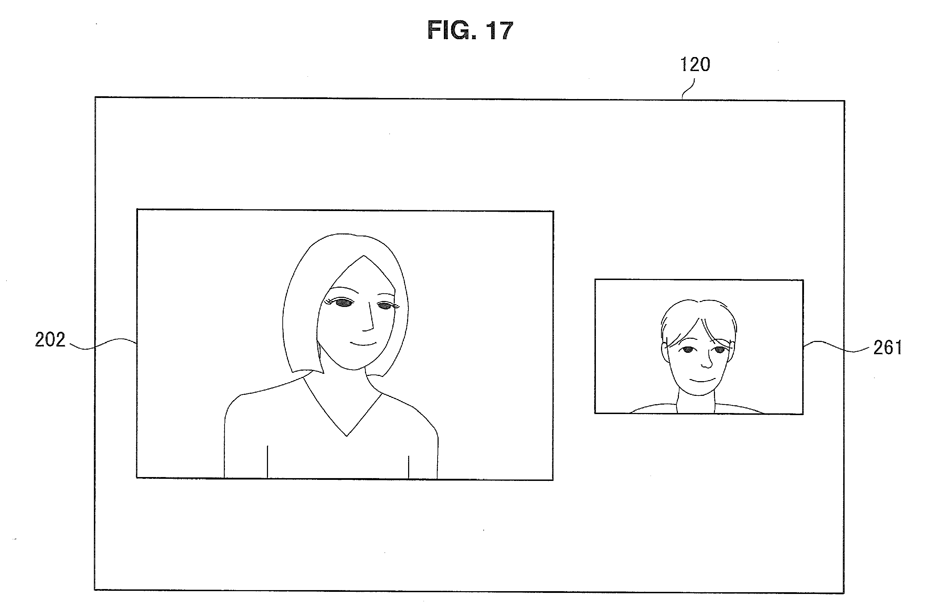

FIG. 17 is an explanatory view showing an example of the screen displayed in the image display unit 120. FIG. 17 illustrates a state in which an image with a face is displayed in the image display area 202. FIG. 17 also illustrates a state in which the image display area 261 that displays the image captured by the imaging device 170 is also displayed in real time in the image display unit 120.

FIG. 17 illustrates a state in which if the user operating the information processing apparatus 100 is oriented to the right toward the information processing apparatus 100, the face detection unit 142 detects the orientation of the face of the user, the image selection unit 143 acquires an image fitting to the orientation from the storage unit 160, and the display controller 144 displays the image acquired by the image selection unit 143 in the image display area 202.

Thus, the image displayed in the image display area 202 is changed only by the orientation of the face being changed toward the imaging device 170 by the user of the information processing apparatus 100 and therefore, the information processing apparatus 100 can enhance the convenience of image selection for the user.

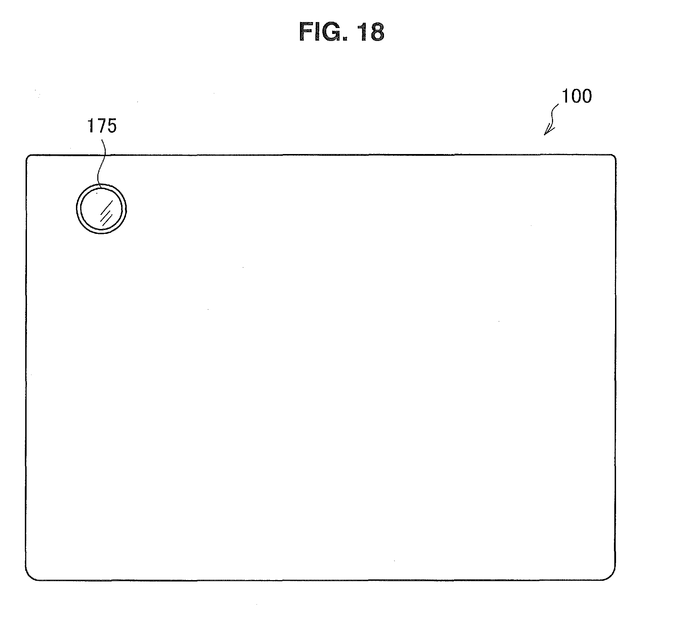

The present technology can similarly be applied when an imaging device is provided on the back side of the image display unit 120. FIG. 18 is an explanatory view showing an appearance example of the information processing apparatus 100 and shows a state in which an imaging device 175 is provided on the back side of the image display unit 120.

Thus, when the imaging device 175 is provided on the back side of the image display unit 120 and the user of the information processing apparatus 100 images the face of a person using the imaging device 175, the orientation of the face of the imaging person and the orientation of the face of a person displayed in the image display area 202 match and therefore, the image selection unit 143 can more intuitively be caused to acquire an image.

When the imaging device 170 or 175 is provided in the information processing apparatus 100 and the face of a person is imaged by the imaging device 170 or 175, the image selection unit 143 may acquire an image containing the same person as the person imaged by the imaging device 170 or 175 or a similar face from the storage unit 160.

### <3. Summary>

According to the embodiments of the present disclosure, as described above, with a face portion of an image displayed in a predetermined area of the image display unit 120 being operated directly or indirectly thereon by the user of the information processing apparatus 100, images of the same person as the person having the face or a person having a face similar to the face can be made to be displayed successively in the predetermined area. Therefore, according to the embodiments of the present disclosure, the convenience of image selection can significantly be enhanced for the user of the information processing apparatus 100.

According to the first embodiment of the present disclosure, an operation by the user of the information processing apparatus 100 on a face portion of an image displayed in a predetermined area of the image display unit 120 is detected and an image based on the user's operation is acquired to switch the image displayed in the predetermined area of the image display unit 120. Accordingly, the information processing apparatus 100 according to the first embodiment of the present disclosure can significantly enhance the convenience of image selection for the user of the information processing apparatus 100.

Also according to the first embodiment of the present disclosure, a face is captured using the information processing apparatus 100 while an image with the face in a predetermined area of the image display unit 120 is displayed and an image in accordance with the orientation of the face is acquired to switch the image displayed in the predetermined area of the image display unit 120. Accordingly, the information processing apparatus 100 according to the second embodiment of the present disclosure can significantly enhance the convenience of image selection for the user of the information processing apparatus 100.

In each of the above embodiments, the image selection unit 143 is assumed to select an image from among images stored inside the information processing apparatus 100, but the present technology is not limited to such an example. For example, an image may be selected from among images stored in an external device or server apparatus connected to the information processing apparatus 100 via a network.

Dedicated hardware may be caused to perform a sequence of processing described in the above embodiments, but software (application) may also be caused to perform the processing. When software is caused to perform a sequence of processing, the sequence of processing can be realized by causing a general-purpose or dedicated computer to execute a computer program.

The preferred embodiments of the present disclosure have been described above with reference to the appended drawings but the present disclosure is not limited to the example. It should be understood by those skilled in the art that various modifications, combinations, sub-combinations and alterations may occur depending on design requirements and other factors insofar as they are within the scope of the appended claims or the equivalents thereof.

Additionally, the present technology may also be configured as below.
(1) An information processing apparatus including:
   an image display unit that displays an image in a predetermined position;
   an input unit that accepts input for a face portion of the image displayed in the image display unit; and
   an image selection unit that selects an image having face parameters concerning the input based on the input accepted by the input unit,
   wherein the image display unit displays the image selected by the image selection unit in a manner that the face portion of the image selected by the image selection unit matches the face portion of the image displayed up to immediately before.
(2) The information processing apparatus according to (1),
   wherein the image display unit includes a touch panel, and
   wherein the input unit accepts an operation on the face portion through the touch panel as the input for the face portion.
(3) The information processing apparatus according to (2), wherein when the input unit accepts an operation to rotate an axis of a face through the touch panel, the image selection unit selects the image having the axis of the face based on the rotating operation.
(4) The information processing apparatus according to (2) or (3), wherein when the input unit accepts a flicking operation with a user's finger through the touch panel, the image selection unit selects an image having a face direction based on a flicking direction of the flicking operation.
(5) The information processing apparatus according to any one of (1) to (4), wherein the image selection unit selects an image containing a same face or a face similar to the face in the image displayed in the image display unit based on the input accepted by the input unit.
(6) The information processing apparatus according to any one of (1) to (5), further including:
   an inclination sensor that detects an inclination,
   wherein the input unit accepts the inclination by the inclination sensor as the input for the face portion.
(7) The information processing apparatus according to any one of (1) to (6), wherein the image selection unit selects an image having face parameters specified in advance and the face parameters concerning the input based on the input accepted by the input unit.
(8) The information processing apparatus according to any one of (1) to (7), wherein the input unit accepts input for a plurality of face portions in the image displayed in the image display unit.
(9) The information processing apparatus according to any one of (1) to (8), wherein the image display unit extracts and displays only the face portion from the image.
(10) An information processing method including:
   a first image display step of displaying an image in a predetermined position;
   an input step of accepting input for a face portion of the image displayed by the image display step;
   an image selection step of selecting an image having face parameters concerning the input based on the input accepted by the input step; and
   a second image display step of displaying the image selected by the image selection step in a manner that the face portion of the image selected by the image selection step matches the face portion of the image displayed up to immediately before by the first image display step.
(11) A computer program for causing a computer to execute:
   a first image display step of displaying an image in a predetermined position;
   an input step of accepting input for a face portion of the image displayed by the image display step;
   an image selection step of selecting an image having face parameters concerning the input based on the input accepted by the input step; and
   a second image display step of displaying the image selected by the image selection step in a manner that the face portion of the image selected by the image selection step matches the face portion of the image displayed up to immediately before by the first image display step.

### Reference Signs List

- 100: information processing apparatus
- 110: communication unit
- 120: image display unit
- 130: audio output unit
- 140: control unit
- 141: operation detection unit
- 142: face detection unit
- 143: image selection unit
- 144: display controller
- 150: operation unit
- 160: storage unit
- 170: imaging device
- 180: sensor unit

## Claims

1. An information processing apparatus comprising:
an image display unit that displays an image in a predetermined position;
an input unit that accepts input for a face portion of the image displayed in the image display unit; and
an image selection unit that selects an image having face parameters concerning the input based on the input accepted by the input unit,
wherein the image display unit displays the image selected by the image selection unit in a manner that the face portion of the image selected by the image selection unit matches the face portion of the image displayed up to immediately before.

2. The information processing apparatus according to claim 1,
wherein the image display unit includes a touch panel, and
wherein the input unit accepts an operation on the face portion through the touch panel as the input for the face portion.

3. The information processing apparatus according to claim 2, wherein when the input unit accepts an operation to rotate an axis of a face through the touch panel, the image selection unit selects the image having the axis of the face based on the rotating operation.

4. The information processing apparatus according to claim 2, wherein when the input unit accepts a flicking operation with a user's finger through the touch panel, the image selection unit selects an image having a face direction based on a flicking direction of the flicking operation.

5. The information processing apparatus according to claim 1, wherein the image selection unit selects an image containing a same face or a face similar to the face in the image displayed in the image display unit based on the input accepted by the input unit.

6. The information processing apparatus according to claim 1, further comprising:
an inclination sensor that detects an inclination,
wherein the input unit accepts the inclination by the inclination sensor as the input for the face portion.

7. The information processing apparatus according to claim 1, wherein the image selection unit selects an image having face parameters specified in advance and the face parameters concerning the input based on the input accepted by the input unit.

8. The information processing apparatus according to claim 1, wherein the input unit accepts input for a plurality of face portions in the image displayed in the image display unit.

9. The information processing apparatus according to claim 1, wherein the image display unit extracts and displays only the face portion from the image.

10. An information processing method comprising:
displaying an image in a predetermined position;
accepting input for a face portion of the image displayed in the predetermined position;
selecting an image having face parameters concerning the input based on the accepted input; and
displaying the image selected in a manner that the face portion of the selected image matches the face portion of the image displayed up to immediately before in the predetermined position.

11. A computer program for causing a computer to execute:
displaying an image in a predetermined position;
accepting input for a face portion of the image displayed in the predetermined position;
selecting an image having face parameters concerning the input based on the accepted input; and
displaying the image selected in a manner that the face portion of the selected image matches the face portion of the image displayed up to immediately before in the predetermined position.
